# EUROPÄISCHE PATENTSCHRIFT

(11) **EP 3 545 599 B1**
(45) Veröffentlichungstag und Bekanntmachung des Hinweises auf die Patenterteilung: **13.07.2022**
(21) Anmeldenummer: 17822146.1
(22) Anmeldetag: 23.11.2017
(51) Int. Cl.: H02J 3/14, H02J 3/38

(54) **VERFAHREN ZUM EINSPEISEN ELEKTRISCHER LEISTUNG IN EIN ELEKTRISCHES VERSORGUNGSNETZ**
METHOD FOR FEEDING ELECTRICAL POWER INTO AN ELECTRICAL SUPPLY NETWORK
PROCÉDÉ D'INJECTION DE PUISSANCE ÉLECTRIQUE DANS UN RÉSEAU DE DISTRIBUTION ÉLECTRIQUE

(30) Priorität: 23.11.2016 DE 102016122580
(43) Veröffentlichungstag der Anmeldung: 02.10.2019
(73) Patentinhaber: Wobben Properties GmbH, 26607 Aurich (DE)
(72) Erfinder: BROMBACH, Johannes, 13437 Berlin (DE)
(74) Vertreter: Eisenführ Speiser
(86) Internationale Anmeldenummer: PCT/EP2017/080193
(87) Internationale Veröffentlichungsnummer: WO 2018/096030

(56) Entgegenhaltungen:
- EP-A2- 2 306 001
- WO-A1-2005/025026
- WO-A1-2012/041527
- WO-A1-2013/135592
- DE-A1-102010 014 165

## Beschreibung

Die vorliegende Erfindung betrifft ein Verfahren zum Einspeisen elektrischer Leistung in ein elektrisches Versorgungsnetz. Außerdem betrifft die vorliegende Erfindung eine Windenergieanlage zum Einspeisen elektrischer Leistung in ein elektrisches Versorgungsnetz. Außerdem betrifft die vorliegende Erfindung einen mehrere Windenergieanlagen aufweisenden Windpark zum Einspeisen elektrischer Leistung in ein elektrisches Versorgungsnetz.

Das Einspeisen elektrischer Leistung mittels Windenergieanlagen oder Windparks in ein elektrisches Versorgungsnetz ist bekannt. Bekannt ist inzwischen auch, mit Windenergieanlagen oder Windparks sogenannte Systemdienstleistungen anzubieten, die helfen, das elektrische Versorgungsnetz elektrisch zu stützen und/oder zu verbessern.

Besonders problematisch ist es, wenn zum Stützen des elektrischen Versorgungsnetzes die einzuspeisende Leistung erhöht werden soll, weil Windenergieanlagen regelmäßig so viel Leistung einspeisen, wie sie aktuell dem Wind entnehmen können. Dazu wurde zur Verbesserung bereits für kurzfristige Leistungserhöhungen vorgeschlagen, Leistung aus der Schwungmasse des sich drehenden Rotors zu verwenden. Wird aber mit erhöhter Leistung eingespeist und dazu Leistung aus dem drehenden Rotor verwendet, verlangsamt sich dieser, sodass die entsprechend erhöht eingespeiste Leistung nur für einen kurzen Zeitraum eingespeist werden kann.

Somit werden dort zwar Lösungen für eine kurzfristige Leistungserhöhung vorgeschlagen, die Auswirkungen auf die jeweilige Windenergieanlage durch eine solche kurzfristige Leistungserhöhung werden aber in Kauf genommen oder nicht oder wenig berücksichtigt.

Durch eine Leistungsentnahme aus der Schwungmasse reduziert sich die Drehzahl der Windenergieanlage. Das hat nicht nur Auswirkungen auf die betreffende Windenergieanlage, sondern kann auch das betreffende elektrische Versorgungsnetz in einen geschwächten Zustand versetzen. Bspw. kann bei einer zu starken Entnahme von Schwungenergie die Windenergieanlage ihren Betriebspunkt verlieren und muss dann ggf. zunächst in einen Betriebspunkt weiterbetrieben werden, der eine geringere Leistungseinspeisung ermöglicht als Aufgrund des vorherrschenden Windes möglich wäre.

Außerdem führt das Abrufen solcher Stützenergie auch dazu, dass zunächst keine weitere Stützenergie mehr entnommen werden kann, wenn die betreffende Windenergieanlage bzw. die insgesamt involvierten Windenergieanlagen ihr Potenzial an Stützenergie abgegeben haben. Dann muss in einem ggf. länger anhaltenden Prozess erst die Drehzahl der betreffenden Windenergieanlagen wieder erhöht werden, um dann wieder Schwungenergie zur Verfügung zu haben.

Das Deutsche Patent- und Markenamt hat in der Prioritätsanmeldung zur vorliegenden Anmeldung folgenden Stand der Technik recherchiert: DE 10 2011 006 670 A1, DE 10 2015 208 554 A1, WO 2012 / 171 532 A2 und EP 1 665 494 B1.

Die internationale Recherchenbehörde und die Prüfungsabteilung haben zur vorliegenden Anmeldung folgenden Stand der Technik recherchiert: DE 10 2010 014 165 A1, WO 2005/025026 A1, EP 2 306 001 A2, DE 10 2009 014 012 A1, WO 2012/041527 A1, und WO 2013/135592 A1. Das Dokument DE 10 2010 014 165 A1 betrifft eine dynamische Trägheitsregelung einer Windenergieanlage, bei der mittels einer Zusatzregelung durch Erniedrigung der Drehzahl dem Windrotor kontrolliert kinetische Energie entzogen wird, die vom Generator in zusätzliche elektrische Energie umgewandelt wird. Auf diese Weise kann durch Drehzahländerung gezielt Primärregelleistung zur Verfügung gestellt werden, und zwar auch bei instationären Windbedingungen. Das Dokument WO 2005/025026 A1 betrifft eine Windenergieanlage und ein Verfahren zum Betreiben einer Windenergieanlage, bei der die in der Windenergieanlage gespeicherte kinetische Energie im Bedarfsfall zur Netzstützung herangezogen wird. Das Dokument EP 2 306 001 A2 betrifft eine Windenergieanlage, bei der ein aufladbarer Energiespeicher vorgesehen ist, um bei Bedarf zusätzliche Stützenergie an das elektrische Versorgungsnetz abgeben zu können. Das Dokument DE 10 2009 014 012 A beschreibt ein Verfahren zum Betrieb einer Windenergieanlage, bei dem die von der Windenergieanlage abgegebene Leistung kurzfristig erhöht wird, wenn die Frequenz des elektrischen Netzes unterhalb eines bestimmten Sollwertes abfällt. Das Dokument WO 2012/041527 A1 schlägt vor, Leistungsschwingungen durch eine entsprechende Ansteuerung von Wandlern mit einem Schwingungssteuerungssignal zu dämpfen. Das Dokument WO 2013/135592 A1 beschreibt eine Windenergieanlage, die elektrische Leistung in ein Versorgungsnetz einspeist und darüber hinaus elektrische Leistung einer Umwandlungseinrichtung zum Erzeugen von brennbaren Gas oder einem elektrischen Speicher zuführt.

Der vorliegenden Erfindung liegt somit die Aufgabe zu Grunde, zumindest eines der oben genannten Probleme zu adressieren. Insbesondere soll eine Lösung vorgeschlagen werden, bei der eine oder mehrere Windenergieanlagen für eine kurzfristige Leistungserhöhung eine entsprechende Stützleistung bereitstellen können, ohne dabei aber einen stabilen Arbeitspunkt zu verlieren. Insbesondere soll vermieden werden, dass die eine oder mehreren Windenergieanlagen durch eine solche Bereitstellung von Stützleistung instabil werden oder sogar anhalten. Zumindest soll gegenüber bisher Bekanntem eine Alternative Lösung vorgeschlagen werden.

Erfindungsgemäß wird ein Verfahren gemäß Anspruch 1 vorgeschlagen. Dieses Verfahren betrifft das Einspeisen elektrischer Leistung in ein elektrisches Versorgungsnetz mittel wenigstens einer Windenergieanlage an einem Netzanschlusspunkt. Die Windenergieanlage speist also an dem Netzanschlusspunkt in das elektrische Versorgungsnetz ein. Das Verfahren kann auch mehrere Windenergieanlagen betreffen, nämlich insbesondere mehrere Windenergieanlagen, die in einem Windpark organisiert sind und zusammen an dem Netzanschlusspunkt in das elektrische Versorgungsnetz einspeisen.

Die wenigstens eine Windenergieanlage weist einen aerodynamischen Rotor mit Rotorblättern auf und der Rotor hat ein Trägheitsmoment und kann mit variabler Rotordrehzahl betrieben werden. Es wird also eine sog. drehzahlvariable Windenergieanlage zugrundegelegt. Die wenigstens eine Windenergieanlage weist auch einen Generator zum Erzeugen einer Generatorleistung auf.

Außerdem wird zugrundegelegt, dass mehrere Energieerzeuger Leistung in das elektrische Versorgungsnetz einspeisen. Es speist also nicht nur die wenigstens eine Windenergieanlage Leistung in das elektrische Versorgungsnetz ein, sondern wenigstens ein weiterer Energieerzeuger, insbesondere mehrere bzw. viele Energieerzeuger. Es wird auch zugrundegelegt, dass mehrere Verbraucher Leistung aus dem elektrischen Versorgungsnetz entnehmen. Dabei ergibt sich im elektrischen Versorgungsnetz eine Leistungsbilanz zwischen der eingespeisten und der entnommenen Leistung. Diese wird als positiv angesehen, wenn mehr Leistung eingespeist als entnommen wird. Idealerweise ist eine solche Leistungsbilanz 0, wenn nämlich genau so viel Leistung eingespeist wie entnommen wird.

Für das Verfahren wird nun vorgeschlagen, dass eine elektrische Grundleistung in Abhängigkeit verfügbare Windleistung durch die wenigstens eine Windenergieanlage in das elektrische Versorgungsnetz eingespeist wird. Diese elektrische Grundleistung ist somit im Grunde die Leistung, die die Windenergieanlage dem Wind unmittelbar entnimmt und in das elektrische Versorgungsnetz einspeist. Bei dieser Betrachtung bleiben Leistungsverluste bspw. durch Leitungsverluste und/oder Wärmeverluste in übertragenden oder umwandelnden Elementen der Windenergieanlage unberücksichtigt. Zum Zwecke der Erläuterung wird also davon ausgegangen, dass die dem Wind entnommene Leistung auch in das elektrische Versorgungsnetz als diese elektrische Grundleistung eingespeist wird.

Außerdem wird eine zusätzlich einzuspeisende Stützleistung vorgegeben. Diese einzuspeisende Stützleistung geht somit über die elektrische Grundleistung hinaus und sie geht damit über die Leistung hinaus, die in dem Moment dem Wind durch die betreffende Windenergieanlage entnommen werden kann.

Diese vorgegebene Stützleistung wird dann zusätzlich eingespeist, nämlich zusätzlich zur elektrischen Grundleistung, um das elektrische Versorgungsnetz zu stützen.

Es wird dazu nun vorgeschlagen, dass eine zur einzuspeisenden Stützleistung verfügbare Stützenergiemenge bestimmt wird. Die vorgegebene und zusätzlich eingespeiste Stützleistung benötigt eine zum Wind zusätzliche Energiequelle. Das kann bspw. Rotationsenergie des aerodynamischen Rotors sein. Es können auch andere oder zusätzliche Energiequellen vorhanden sein und verwendet werden, wie bspw. ein Batteriespeicher. Es wird nun vorgeschlagen, solche zur einzuspeisenden Stützleistung verfügbare Stützenergiemenge zu bestimmen. Es wird mit anderen Worten die Energiemenge bestimmt, die in den für die Stützleistung zur Verfügung stehenden Energiequellen vorhanden ist. Es wird hier bewusst die verfügbare Stützenergiemenge und nicht eine in dem Moment verfügbare Stützleistung bestimmt, um damit eine Berücksichtigung über den momentanen Zeitpunkt hinaus zu ermöglichen.

Schließlich wird die Stützleistung in Abhängigkeit der bestimmten verfügbaren Stützenergiemenge vorgegeben. Die Stützleistung hängt also nicht nur von dem Bedarf an Stützleistung des elektrischen Versorgungsnetzes in dem Moment ab und auch nicht nur von technischen Rahmenbedingungen, diese zusätzliche Stützleistung einzuspeisen, wie bspw. Stromgrenzen, sondern es wird auch bewusst die verfügbare Stützenergiemenge berücksichtigt.

Damit kann besonders auch geplant werden, über welchen Zeitraum eine wie große Stützleistung zusätzlich zu der elektrischen Grundleistung eingespeist werden kann. Mit anderen Worten wird eine vollständige Berücksichtigung der Energiereserve in den zusätzlichen Energiequellen vorgeschlagen. Damit kann besonders auch vermieden werden, dass die verfügbare Stützenergiemenge plötzlich aufgebraucht ist, die entsprechenden Energiequellen also aufgebraucht sind, und dann die Stützleistung abrupt abfallen muss. Es wird auch die Möglichkeit geschaffen, eine Abwägung zu treffen zwischen einem momentanen Stützbedarf und einem kurzzeitig später noch benötigtem Stützbedarf. Es wird auch die Möglichkeit geschaffen, einen zeitlichen Verlauf für die einspeisbare Stützleistung zu planen. Dabei betrifft eine solche Planung Zeiträume im Bereich von Sekunden, insbesondere im Bereich von 5 bis 30 Sekunden.

Vorzugsweise wird zum Einspeisen der elektrischen Leistung wenigstens ein Wechselrichter verwendet. Dies wird ganz allgemein auch für jegliche Ausführungsformen vorgeschlagen. Vorzugsweise wird die zusätzlich einzuspeisende Stützleistung abhängig einer Auslastung des wenigstens einen Wechselrichters bestimmt. Grundsätzlich wird die einzuspeisende Stützleistung besonders in Abhängigkeit einer Leistungsbilanz bestimmt, insbesondere abhängig der Frequenz des elektrischen Versorgungsnetzes, die ein guter Indikator für die Leistungsbilanz sein kann. Dazu zusätzlich wird vorgeschlagen, eine Auslastung des wenigstens einen Wechselrichters zu berücksichtigen. Das bedeutet besonders, dass hier die Machbarkeit der zusätzlichen Einspeisung der Stützleistung berücksichtigt wird. Außerdem oder alternativ kann die eingespeiste Blindleistung berücksichtigt werden und entsprechend abhängig davon die zusätzlich einzuspeisende Stützleistung bestimmt werden. Auch die eingespeiste Blindleistung trägt zur Auslastung des wenigstens einen Wechselrichters bei und es wurde erkannt, dass es daher vorteilhaft sein kann, die eingespeiste Blindleistung beim Bestimmen der zusätzlichen Stützleistung zu berücksichtigen.

Vorzugsweise wird vorgeschlagen, die eingespeiste Blindleistung zu reduzieren, um eine höhere Stützleistung einspeisen zu können. Eine solche Blindleistungsreduzierung kann dann bereits bei der Bestimmung der zusätzlich einzuspeisenden Stützleistung berücksichtigt werden. Mit anderen Worten kann dann die zusätzlich einzuspeisende Stützleistung ggf. mit einem größeren Wert bestimmt werden, als dies aufgrund der aktuell eingespeisten Blindleistung gemacht würde, wenn die eingespeiste Blindleistung auf einen neuen Wert reduziert wird. In diesem Fall wird zur Bestimmung der einzuspeisenden Stützleistung dieser neue Wert der eingespeisten Blindleistung berücksichtigt.

Vorzugsweise wird die verfügbare Stützenergiemenge ermittelt aus dem Trägheitsmoment des Rotors, wenigstens einer Betriebskenngröße des aktuellen Betriebspunktes der Windenergieanlage und einer zulässigen unteren Rotordrehzahl. Hierfür wird besonders der Fall angenommen, dass die in dem Rotor der Windenergieanlage gespeicherte Rotationsenergie die Energiequelle für die verfügbare Stützenergiemenge ist. Soweit zusätzliche Energiequellen vorhanden sind, können diese zusätzlich berücksichtigt werden.

Bei dieser hier vorgeschlagenen Ermittlung der verfügbaren Stützenergiemenge aus der Rotationsenergie des Rotors wird somit zunächst das Trägheitsmoment des Rotors berücksichtigt. Es kann hier noch das Trägheitsmoment des Rotors des Generators hinzukommen, das regelmäßig aber einen signifikant kleineren Stellenwert hat, als das Trägheitsmoment des aerodynamischen Rotors.

Weiterhin wird wenigstens eine Betriebskenngröße des aktuellen Betriebspunktes der Windenergieanlage berücksichtigt, was insbesondere die aktuelle Rotordrehzahl ist. Es können hier aber auch andere Größen berücksichtigt werden bzw. hinzukommen, wie ein aktueller Blattanstellwinkel der Rotorblätter des Rotors und die in dem Moment abgegebene elektrische Generatorleistung. Aus dem Trägheitsmoment des Rotors und der Rotordrehzahl kann in der aktuellen Drehbewegung des Rotors gespeicherte kinetische Energie berechnet werden.

Diese kinetische Energie des sich drehenden Rotors, also die Rotationsenergie, ist allerdings nicht unbedingt die zur einzuspeisenden Stützleistung verfügbare Stützenergiemenge, denn diese Rotationsenergie kann häufig nicht vollständig abgerufen werden bzw. es ist häufig nicht sinnvoll diese vollständig abzurufen. Sie vollständig abzurufen würde bedeuten, den Rotor auf 0 zu reduzieren. Das wäre allerdings aus vielerlei Hinsicht unvorteilhaft, weil danach nämlich die Windenergieanlage zunächst gar keine Leistung einspeisen kann, was die Gesamtsituation verschlechtert. Außerdem wird bei einer Reduzierung der Rotordrehzahl auf sehr geringe Werte oder sogar auf 0 auch die aus dem Wind entnehmbare Leistung zurückgehen, so dass die insgesamt eingespeiste Leistung zurückgehen kann und damit faktisch weniger zusätzliche Stützleistung eingespeist wird.

Deshalb wird vorgeschlagen, zusätzlich eine zulässige untere Rotordrehzahl zu berücksichtigen. Eine solche zulässige untere Rotordrehzahl ist eine, auf die der Rotor für diese Stützung abgebremst werden darf. Diese zulässige untere Rotordrehzahl berücksichtigt somit insbesondere, dass bei ihr ein Weiterbetrieb der Windenergieanlage noch möglich ist. Zusätzlich kann sie eine Verringerung der Leistungsentnahme aus dem Wind berücksichtigen und somit auf einen Wert gesetzt werden, bei dem die aus dem Wind entnehmbare Leistung nur um einen vorbestimmten Wert verringert wird, der vorzugsweise möglichst klein gewählt ist.

Gemäß einer Ausführungsform wird vorgeschlagen, dass die wenigstens eine Betriebsgröße des aktuellen Betriebspunktes wenigstens eine der folgenden Größen umfasst, nämlich die aktuelle Rotordrehzahl, die aktuelle Generatorleistung und die vorherrschende Windgeschwindigkeit.

Die aktuelle Rotordrehzahl wird besonders dafür verwendet, die vorhandene kinetische Energie, nämlich die Rotationsenergie, des sich drehenden Rotors zu bestimmen.

Die aktuelle Generatorleistung ist, besonders zusammen mit der Rotordrehzahl, eine wichtige Betriebskenngröße des aktuellen Betriebspunktes der Windenergieanlage. Daraus kann erkannt werden, ob die Windenergieanlage gerade viel oder wenig Leistung umsetzt und daraus lässt sich auch ableiten, wie viel Reserve die Windenergieanlage hat, ihren Betriebspunkt zu verschieben. Das Abrufen von Rotationsenergie führt dazu, dass sich der Betriebspunkt der Windenergieanlage verschiebt und je nachdem wo sich dieser Betriebspunkt befindet, ist eine entsprechend große oder kleine Verschiebung des Betriebspunktes möglich. Besonders wenn die Windenergieanlage viel Leistung umsetzt, ist auch üblicherweise die vorherrschende Windgeschwindigkeit hoch. Wird dann der Betriebspunkt aus seiner optimalen Lage in eine weniger optimale Lage verschoben, kann er aber bei besonders starkem Wind, also hoher vorherrschender Windgeschwindigkeit, leichter wieder in vorherigen Betriebspunkt zurückgebracht werden.

Andererseits kann eine in Bezug auf die aktuelle Drehzahl vergleichsweise hohe Leistung darauf hindeuten, dass die Anlage nicht in einem optimalen Betriebspunkt arbeitet. Das kann auch bedeuten, dass der Betriebspunkt auf einer Drehzahl-/Leistungskennlinie an einer Flanke liegt und daher eine Änderung der Drehzahl zu einer vergleichsweise starken Leistungsreduzierung führen kann. In diesem Fall würde die Entnahme von Rotationsenergie zu einem vergleichsweise starken Leistungseinbruch führen. Das kann auch bedeuten, dass die Drehzahl nur gering abgesenkt werden kann. Durch die Berücksichtigung der Generatorleistung kann das bei der Bestimmung der verfügbaren Stützenergie berücksichtigt werden.

Außerdem oder stattdessen kann die vorherrschende Windgeschwindigkeit berücksichtigt werden. Dazu kann sie gemessen werden, wobei eine Messung mit einem entsprechenden Messgerät an der Windenergieanlage oder aber auch die Messung mit einem in der Nähe stehenden Messmast in Betracht kommt. Da die Messung einer Windgeschwindigkeit häufig ungenau ist, kommt auch in Betracht, die Windgeschwindigkeit aus der Rotordrehzahl und der Generatorleistung abzuleiten.

Jedenfalls kann dann daraus besser erkannt werden, wie weit der Betriebspunkt verändert werden kann und insbesondere wie stark die Rotordrehzahl verringert werden kann und somit wie viel Rotationsenergie tatsächlich entnommen werden kann. Eben diese entnehmbare Rotationsenergie führt dann zur verfügbaren Stützenergiemenge. Sofern keine weiteren Energiequellen vorhanden sind und Verluste unberücksichtigt bleiben, ist diese entnehmbare Rotationsenergie die verfügbare Stützenergiemenge.

Gemäß einer weiteren Ausführungsform wird vorgeschlagen, dass zur Ermittlung der verfügbaren Stützenergiemenge eine Leistungseinbuße durch eine Reduzierung der Rotordrehzahl berücksichtigt wird. Wird zur Leistungsentnahme die Rotordrehzahl verringert, so kann sich auch die Leistungsentnahme aus dem Wind durch den so verlangsamten Rotor verschlechtern. Das schmälert die faktisch verfügbare Stützenergiemenge und kann somit bei der Ermittlung der verfügbaren Stützenergiemenge berücksichtigt werden.

Alternativ oder zusätzlich wird vorgeschlagen, dass das Vorgeben der zusätzlich einzuspeisenden Stützleistung in Abhängigkeit der Leistungseinbuße durch eine Reduzierung der Rotordrehzahl vorgenommen wird. Dadurch kann die Leistungseinbuße durch entsprechende Anpassung der Stützleistung ausgeglichen werden.

Gemäß einer Ausgestaltung ist vorgesehen, dass die wenigstens eine Windenergieanlage zur Bereitstellung der Stützleistung mit wenigstens einem elektrischen Speicher gekoppelt ist und zur Ermittlung der verfügbaren Stützenergiemenge eine Rotationsenergie des Rotors und jeweils einen Speicherinhalt des wenigstens einen elektrischen Speichers berücksichtigt. Die Stützleistung kann in diesem Fall auf mehrere Energiequellen zurückgreifen, nämlich auf einen Teil der Rotationsenergie des sich drehenden Rotors und auf wenigstens einen elektrischen Speicher. Besonders kann ein solcher elektrischer Speieher vorgesehen sein, um eine mögliche Stützenergiemenge zu erhöhen, nämlich über die Menge zu erhöhen, die aus dem sich drehenden Rotor verwendet werden kann.

Der elektrische Speicher kann eine Batterie und außerdem oder zusätzlich ein Hochleistungskondensator sein, der in Fachkreisen auch als Super-Cap oder Ultra-Cap bezeichnet wird. Besonders die Verwendung solcher Hochleistungskondensatoren wird vorgeschlagen, weil sie wartungsarm sind und Energie bzw. Leistung sehr schnell bereitstellen können. Dennoch ist hier auch wichtig, welchen Speicherinhalt sie haben, wie stark sie also geladen sind. Und auch für solche elektrischen Speicher, das gilt für die Batterie als auch für den Hochleistungskondensator, kann in Betracht kommen, dass auch sie nicht vollständig entladen werden können. Das ergibt sich bei einem Kondensator besonders aufgrund der sinkenden Spannung und bei der Batterie aufgrund eines steigenden Innenwiderstandes bei einer Entladung. Somit wird auch hier vorgeschlagen, zu berücksichtigen, wie viel der vorhandenen Energie tatsächlich entnommen werden kann. Das kann auch von der elektronischen Schalteinheit abhängen, die jeweils die Energie aus dem elektrischen Speicher entnimmt. So kann es bspw. sein, dass ein auf eine Spannung von 800 Volt aufgeladener Kondensator bspw. nur bis 300 Volt entladen werden kann, weil eine solche geringe Spannung von 300 Volt oder weniger eine elektronische Einheit benötigen würde, die diese Spannung zur Verwendung in der Windenergieanlage entsprechend hoch setzt. Dies sei nur ein Beispiel und auch die genannten Spannungswerte sind nur beispielhaft genannt. Ähnliche Probleme können bei einer Batterie auftreten. Bei einer Batterie kommt hinzu, dass sie durch eine zu starke Entladung zerstört werden kann.

All diese Effekte werden vorzugsweise bei der Ermittlung der verfügbaren Stützenergiemenge berücksichtigt.

Gemäß einer Ausführungsform wird vorgeschlagen, dass beim Einspeisen einer Stützleistung die verfügbare Stützenergiemenge aktualisiert wird, insbesondere kontinuierlich aktualisiert wird. Diese Aktualisierung soll also beim Einspeisen der Stützleistung erfolgen und muss entsprechend schnell bzw. mit der Einspeisung gleichzeitig aktualisiert werden. Dabei wird vorgeschlagen, dass diese Aktualisierung in Abhängigkeit der eingespeisten Stützleistung erfolgt. Es wird somit die eingespeiste Stützleistung überwacht und diese Information wird verwendet, um die verfügbare Stützenergiemenge ständig zu aktualisieren. Hierzu kommt besonders in Betracht, dass die eingespeiste Stützleistung kontinuierlich über die Zeit zu einer eingespeisten Stützenergie integriert wird. Hierbei ist besonders zu beachten, dass eine Stützleistung, sofern die verfügbare Stützenergiemenge das zulässt, in Abhängigkeit einer Frequenz im elektrischen Versorgungsnetz eingespeist wird. Schwankungen der Frequenz können somit auch zu Schwankungen der Stützleistung führen. Es wird auch vorgeschlagen zu berücksichtigen, dass ein Unterschied zwischen der vorgesehenen Stützleistung, also eines Stützleistungssollwerts, und der tatsächlich eingespeisten Stützleistung, also eines Stützleistungs-Ist-Werts, bestehen kann. Dennoch kommt neben einer Messung der eingespeisten Stützleistung in Betracht, die eingespeiste Stützleistung über ihren Sollwert zu berücksichtigen und ggf. bekannte besonders dynamische Abweichungen zwischen Soll- und Ist-Leistung zu berücksichtigen.

Außerdem oder alternativ wird vorgeschlagen, dass die verfügbare Stützenergiemenge aktualisiert wird unter Berücksichtigung eines Änderungsverhaltens der Windenergieanlage als Reaktion auf die Einspeisung der Stützleistung. Hier kommt besonders in Betracht, eine Abnahme der Rotordrehzahl als Reaktion auf eine Abgabe von Rotationsenergie des Rotors zu berücksichtigen.

Besonders die Rotordrehzahl kann regelmäßig sehr genau und schnell erfasst werden. Da sich das Trägheitsmoment des Rotors nicht nennenswert verändert, ist somit auch aktuell die im Rotor vorhandene Rotationsenergie erfassbar. Besonders unter der Annahme, dass sich eine zulässige untere Rotordrehzahl für den aktuellen Stützfall nicht ändert, kann durch Beobachtung der Abnahme der Rotordrehzahl die Änderung der verfügbaren Stützenergiemenge schnell und genau erfasst werden.

Die Abnahme der vorhandenen Energie eines oder mehrerer vorhandener elektrischer Speicher kann regelmäßig durch die Überwachung der Ausgangsspannung dieser elektrischen Speicher erkannt werden. Besonders für Batteriespeicher kommen aber auch andere Verfahren in Betracht, die dem Fachmann grundsätzlich geläufig sind.

Durch das Aktualisieren der verfügbaren Stützenergiemenge kann besonders auf einfache Art und Weise auch die aktuell vorgegebene zusätzlich einzuspeisende Stützleistung bestimmt werden.

Gemäß einer Ausführungsform wird vorgeschlagen, dass die wenigstens eine Windenergieanlage mit wenigstens einem in seinem Verbrauch steuerbar reduzierbaren Verbraucher gekoppelt ist und die Bestimmung der verfügbaren Stützenergiemenge eine durch eine Reduzierung des wenigstens einen steuerbar reduzierbaren Verbrauchers verfügbare Energiemenge berücksichtigt. Hier liegt besonders der Gedanke zugrunde, dass ein Verbraucher, der mit der Windenergieanlage gekoppelt ist, Leistung der Windenergieanlage verbraucht. Die Windenergieanlage speist somit diese Leistung weniger in das elektrische Versorgungsnetz ein. Lässt sich dieser Verbraucher zumindest kurzzeitig und auch kurzfristig Reduzieren oder Abschalten, kann diese von ihm verbrauchte Leistung, die normalerweise bei der Einspeisung fehlt, nun zur Stützung verwendet werden. Das wird vorzugsweise bei der Bestimmung der verfügbaren Stützenergiemenge mit berücksichtigt.

Es wird darauf hingewiesen, dass eine solche Leistung, die der Verbraucher während des Stützfalls nicht verbraucht, unmittelbar der Stützleistung zugeschlagen werden könnte. Dies wird gemäß einer Ausführungsform auch vorgeschlagen, aber unter Berücksichtigung der Tatsache, dass ein Teil, insbesondere ein großer Teil, der Stützleistung aus der Rotationsenergie des Rotors genommen wird, ist die Gesamtsituation zu betrachten und dafür wird vorgeschlagen, auch diese durch den in seinem Verbrauch reduzierten Verbraucher verfügbar gemachte Leistung in verfügbare Energie umzurechnen und der verfügbaren Stützenergiemenge zuzufügen bzw. die verfügbare Stützenergiemenge unter Berücksichtigung dieser durch den Verbraucher verfügbar gemachten Energie zu bestimmen. Dazu kann bspw. die durch den Verbraucher verfügbar gemachte Leistung über die Dauer des zu erwartenden Stützfalls zu einer Energie integriert werden. Ändert sich diese Dauer, kann die Berechnung der verfügbaren Stützenergiemenge aktualisiert werden. Alternativ wird diese durch den Verbraucher verfügbar gemachte Leistung der Stützleistung unmittelbar aufgeschlagen.

Es wird darauf hingewiesen, dass in diesem Fall eines fest mit der Windenergieanlage gekoppelten und in seinem Verbrauch steuerbar reduzierbaren Verbrauchers die elektrische Grundleistung um diese Verbrauchsleistung unterhalb der aus dem Wind erzeugten Leistung liegt.

Gemäß einer Ausführungsform wird vorgeschlagen, dass zum Vorgeben der Stützleistung ein Verlauf der Stützleistung in Abhängigkeit der Stützenergiemenge vorgegeben wird. Insbesondere wird vorgesehen, dass das Vorgeben der Stützleistung abhängig der Stützenergiemenge über einen zeitabhängigen Verlauf erfolgt. Ein solcher Verlauf der Stützleistung in Abhängigkeit der Stützenergiemenge kann besonders so aussehen, dass bei anfangs ausreichend vorhandener Stützenergiemenge die Stützleistung einen aufgrund von Randbedingungen wie die Auslastung des Wechselrichters eine konstante Stützleistung vorgegeben wird. Reduziert sich nun die verfügbare Stützenergiemenge unter einer vorgebbare Mindeststützenergiemenge, reduziert sich die Stützleistung dann mit weiter abfallender verfügbarer Stützenergiemenge. Vorzugsweise kann hier ein proportionaler Zusammenhang zwischen verfügbarer Stützenergiemenge und eingespeister bzw. entsprechend vorgegebener Stützleistung vorgesehen sein. In diesem Fall ergäbe sich eine immer langsamer fallende Stützleistung, die sich idealisiert asymptotisch dem Wert 0 nähren würde. Gemäß einer anderen Variante wird vorgeschlagen, dass für die genannte verbliebene Mindeststützenergiemenge ein verbleibendes Zeitintervall berechnet wird, in dem die Leistung mit der Zeit proportional auf 0 fällt und dabei genau diese verbleibende Mindeststützenergiemenge einspeist, um ein weiteres Beispiel zu nennen.

Wird der zeitabhängige Verlauf verwendet, so kann auch vorgesehen sein, dass bereits für die gesamte verfügbare Stützenergiemenge ein Verlauf der Stützleistung über die Zeit vorbestimmt wird, der genau zum Verbrauch der verfügbaren Stützenergiemenge führt. Natürlich wird das Einspeisen der Stützleistung immer dann unterbrochen, wenn eine Stützung des elektrischen Versorgungsnetzes nicht mehr notwendig ist.

Gemäß einer Ausführungsform wird vorgeschlagen, dass die wenigstens eine Windenergieanlage in einem Betriebspunkt betrieben wird, der sich bei Abgabe von Rotationsenergie zunächst verbessert, insbesondere dass die Windenergieanlage mit einer so hohen Rotordrehzahl betrieben wird, dass sich die Rotordrehzahl durch Abgabe von Schwungenergie, also Rotationsenergie, temporär auf eine leistungsoptimale Rotordrehzahl verringert. Das wird besonders für einen unteren Teilllastbetrieb vorgeschlagen, in dem die Windgeschwindigkeit noch deutlich unter der Nennwindgeschwindigkeit liegt, z.B. maximal 50% der Nennwindgeschwindigkeit beträgt.

Hier liegt die Erkenntnis zugrunde, dass es zwar theoretisch nur einen optimalen, nämlich leistungsoptimalen Betriebspunkt für die Windenergieanlage gibt, dass sich in der Nähe dieses optimalen Betriebspunktes ein Betriebsbereich befindet, der nur minimal ungünstiger als der theoretisch leistungsoptimale Betriebspunkt ist. Besonders gibt es häufig eine leistungsoptimale Rotordrehzahl, die besonders auch hinsichtlich der Entnahme der Leistung aus dem Wind optimal ist. Sowohl eine höhere Rotordrehzahl als auch geringere Rotordrehzahl sind ungünstiger, aber geringfügig ungünstiger. So wurde besonders erkannt, dass eine Rotordrehzahl, die höher als die leistungsoptimale Rotordrehzahl ist, zu einer nur minimalen Verschlechterung des Arbeitspunktes führt, gleichzeitig aber eine signifikant höhere Rotationsenergie schafft, insbesondere eine signifikant höhere verfügbare Rotationsenergie. Oftmals kann es sogar sein, dass die Verschlechterung des Arbeitspunktes hierdurch messtechnisch kaum nachweisbar ist. Besonders in diesem Fall wird vorgeschlagen, die Windenergieanlage in einem entsprechend verschobenen Betriebspunkt, nämlich mit einer entsprechend höheren Drehzahl zu betreiben.

Vorzugsweise wird die verfügbare Stützenergiemenge, also hier die verfügbare also sinnvollerweise noch entnehmbare Rotationsenergiemenge, als Maß dafür genommen, wie stark die Rotordrehzahl über die als leistungsoptimal berechnete Rotordrehzahl ansteigt. Hier kann eine Abwägung getroffen werden zwischen der sich erhöhenden verfügbaren Stützenergiemenge einerseits und der sich durch die Erhöhung der Rotordrehzahl verschlechternden Effizienz des Betriebspunktes andererseits. Besonders abhängig davon, ob ein Stützfall in dem elektrischen Versorgungsnetz zu erwarten ist, oder ob bzw. wie viele andere Erzeuger im elektrischen Versorgungsnetz eine ausreichende Stützung durchführen können, kann mit dieser Abwägung eine entsprechende Rotordrehzahl eingestellt bzw. verändert werden.

Gemäß einer Ausführungsform wird vorgeschlagen, dass die Stützleistung in Abhängigkeit eines Netzzustandes des elektrischen Versorgungsnetzes vorgegeben wird, insbesondere in Abhängigkeit der Leistungsbilanz des elektrischen Versorgungsnetzes, wobei zusätzlich eine Leistungsobergrenze in Abhängigkeit der verfügbaren Stützenergiemenge bestimmt und eingehalten wird und die vorgegebene Stützleistung mit einem zeitlich abfallenden Verlauf, insbesondere einer zeitlich abfallenden Flanke reduziert wird, sobald die verfügbare Stützenergiemenge einen vorgegebenen Grenzwert erreicht hat.

Die Stützleistung wird also zunächst in Abhängigkeit eines Netzzustandes des elektrischen Versorgungsnetzes vorgegeben. Das kann insbesondere die Netzfrequenz sein, also die Frequenz der elektrischen Spannung des elektrischen Versorgungsnetzes, die ein Indikator der Leistungsbilanz sein kann. Ggf. kommt in Betracht, die Leistungsbilanz des elektrischen Versorgungsnetzes anderweitig zu berücksichtigen. Das kann bspw. durch eine extern übermittelte Information erfolgen, die bspw. der Netzbetreiber übersenden könnte.

Insoweit bestimmt das elektrische Versorgungsnetz die Stützleistung, denn die Stützleistung soll das elektrische Versorgungsnetz stützen. Die Windenergieanlage kann aber nur begrenzt Stützleistung zur Verfügung stellen und es wird somit vorgeschlagen, mit der Stützleistung zu haushalten. Dazu wird vorgeschlagen, eine Leistungsobergrenze in Abhängigkeit der verfügbaren Stützenergiemenge zu bestimmen und dann natürlich auch einzuhalten. Dazu kann ein erfahrungsgemäß zu erwartender Stützzeitraum zugrundegelegt werden. Hierzu kommt in Betracht, von einem Zeitraum von 10 Sekunden auszugehen. Vorzugsweise liegt dieser Zeitraum im Bereich von 5 bis 30 Sekunden. Abhängig der bestimmten verfügbaren Stützenergiemenge ergibt sich daraus ein Leistungswert für die Stützleistung. Im einfachsten Fall bedeutet das, dass dieser Leistungswert der Stützleistung, also diese Leistungsobergrenze so gewählt wird, dass die verfügbare Stützenergiemenge bei konstanter Einspeisung einer Stützleistung mit dieser Leistungsobergrenze zum Ende des angenommenen Stützzeitraums verbraucht ist oder bis auf eine verbliebene Mindeststützenergiemenge verbraucht ist. Um dann ein abruptes Beenden dieser Stützleistung zu vermeiden, wird vorgeschlagen, die vorgegebene Stützleistung zum Ende hin mit einem zeitlich abfallenden Verlauf zu reduzieren.

Erfindungsgemäß wird auch eine Windenergieanlage vorgeschlagen und diese ist vorbereitet zum Einspeisen elektrischer Leistung in ein elektrisches Versorgungsnetz an einem Netzanschlusspunkt. Sie umfasst einen aerodynamischen Rotor mit Rotorblättern und der Rotor weist ein Trägheitsmoment auf und kann mit variabler Rotordrehzahl betrieben werden. Außerdem weist sie einen Generator zum Erzeugen einer Generatorleistung auf und eine Steuereinheit zum Steuern eines Einspeisens einer elektrischen Grundleistung in Abhängigkeit verfügbarer Windleistung. Eine solche Steuereinheit kann bspw. ein Prozessrechner sein, der ein Teil oder alle Steuerungen der Windenergieanlage übernimmt. Diese Steuereinheit kann bspw. einen Wechselrichter steuern und ggf. weitere Elemente der Windenergieanlage.

Außerdem umfasst die Windenergieanlage ein Vorgabemittel zum Vorgeben einer zusätzlich einzuspeisenden Stützleistung. Ein solches Vorgabemittel kann Teil einer Steuereinrichtung wie eines Steuerprozessors der Windenergieanlage sein. Ein solches Vorgabemittel kann aber auch als separates Steuermittel oder zumindest separates Steuerprogramm vorgesehen sein. Es gibt die zusätzlich einzuspeisende Stützleistung bspw. in Abhängigkeit einer erfassten Frequenz im elektrischen Versorgungsnetz vor oder anhand eines externen Anforderungssignals. Die vorgegebene Stützleistung kann als absoluter Wert oder auch als relativer Wert vorgegeben werden. Bspw. kommt die Vorgabe als relativer Wert in Bezug auf die Nennleistung der Windenergieanlage in Betracht oder als relativer Wert in Bezug auf die in dem Moment aktuell eingespeiste Leistung.

Außerdem weist die Windenergieanlage eine Einspeisevorrichtung zum Einspeisen der vorgegeben Stützleistung zur Stützung des elektrischen Versorgungsnetzes auf. Eine solche Einspeisevorrichtung kann bspw. ein Wechselrichter sein, der bspw. Leistung von dem Generator als Gleichspannung bzw. Gleichstrom erhält und daraus einen einzuspeisenden Wechselstrom erzeugt. Die Einspeisevorrichtung ist dabei vorzugsweise gleichzeitig zum Einspeisen der einzuspeisenden Leistung insgesamt vorgesehen. Anders ausgedrückt kann eine übliche Einspeisevorrichtung wie ein Wechselrichter verwendet werden und dabei auch die Aufgabe übernehmen, die vorgegebene Stützleistung zur Stützung des elektrischen Versorgungsnetzes zusätzlich einzuspeisen.

Es ist auch vorgesehen, dass die Windenergieanlage eine Berechnungseinheit zum Bestimmen einer zur einzuspeisenden Stützleistung verfügbaren Stützenergiemenge aufweist. Diese Berechnungseinheit bestimmt somit eine verfügbare Stützenergiemenge, die dann als Quelle für die einzuspeisende Stützleistung verwendet werden kann. Die Stützleistung wird in Abhängigkeit der bestimmten verfügbaren Stützenergiemenge vorgegeben. Das Vorgabemittel, das die zusätzlich einzuspeisende Stützleistung vorgibt, berücksichtigt somit die von der Berechnungseinheit bestimmte verfügbare Stützenergiemenge und bestimmt abhängig davon die Stützleistung. Das Vorgabemittel zum Vorgeben der zusätzlich einzuspeisenden Stützleistung und die Berechnungseinheit zum Bestimmen der Stützenergiemenge können auch in einer Einheit integriert sein, wie bspw. in einem gemeinsamen Mikroprozessor.

Vorzugsweise ist die Windenergieanlage dazu vorbereitet, ein Verfahren gemäß wenigstens einer der beschriebenen Ausführungsformen auszuführen.

Es wird auch ein Windpark mit mehreren Windenergieanlagen vorgeschlagen, wobei die Windenergieanlagen dieses Windparks gemäß wenigstens einer beschriebenen Ausführungsform einer Windenergieanlage ausgebildet sind. Außerdem oder alternativ ist der Windpark dazu vorbereitet, ein Verfahren gemäß einer beschriebenen Ausführungsform umzusetzen. Diese Umsetzung kann somit so vorgenommen werden, dass jede Windenergieanlage des Windparks für sich ein entsprechendes Verfahren ausführt.

Außerdem oder alternativ kann auch vorgesehen sein, dass der Windpark als Einheit wenigstens ein Verfahren gemäß einer beschriebenen Ausführungsform ausführt. Insbesondere kann für die Vorgabe der Stützleistung und/oder für die Bestimmung der verfügbaren Stützenergiemenge ein zentraler Parkrechner oder andere zentrale Einheit vorgesehen sein, die diese Aufgabe für den Park insgesamt übernimmt. Das Ergebnis kann bspw. an die einzelnen Windenergieanlagen zu konkreten Umsetzung verteilt werden. Dabei kann die vorgegebene Stützleistung auf die einzelnen Windenergieanlagen verteilt werden und/oder die verfügbare Stützenergiemenge. Besonders bei Verwendung eines zentralen Energiespeichers in dem Wind kann die darin enthaltene Stützenergiemenge auf die Windenergieanlagen aufgeteilt und zu den verfügbaren Stützenergiemengen der Rotationsenergie der Rotoren der Windenergieanlagen hinzugefügt und hinzugerechnet werden.

Gemäß einer anderen Ausführungsform kann in dem Fall, dass ein solcher zentraler Energiespeicher im Park vorgesehen ist, eine Einspeisevorrichtung vorgesehen sein, die von diesem zentralen Energiespeicher unmittelbar in das elektrische Versorgungsnetz einspeist. In diesem Fall wird zudem vorgeschlagen, dass solche durch den Windpark unmittelbar, ohne Verwendung einer Windenergieanlage, eingespeiste Stützleistung durch einen Parkregler, oder anderweitig, koordiniert wird. Dabei wird auch eine Koordination dieser eingespeisten Stützleistung mit der von den Windenergieanlagen eingespeisten bzw. zur Einspeisung bereitgestellten Leistung vorgenommen. Die Berechnung der verfügbaren Stützenergiemenge berücksichtigt beide Energiequellenarten, also die Rotationsenergien und die Batteriespeicherenergie.

Die Erfindung wird nun nachfolgend anhand von Ausführungsbeispielen unter Bezugnahme auf die begleitenden Figuren näher erläutert.
- Figur 1: zeigt eine Windenergieanlagen in einer perspektivischen Darstellung.
- Figur 2: zeigt einen Windpark in einer schematischen Darstellung.
- Figur 3: zeigt eine Steuerungsstruktur einer Windenergieanlage schematisch.
- Figur 4: zeigt ein Leistungs- und Energiezeitdiagramm.
- Figur 5: zeigt in einem Diagramm schematisch den Verlauf einer Rotationsenergie in Abhängigkeit einer Drehzahl.

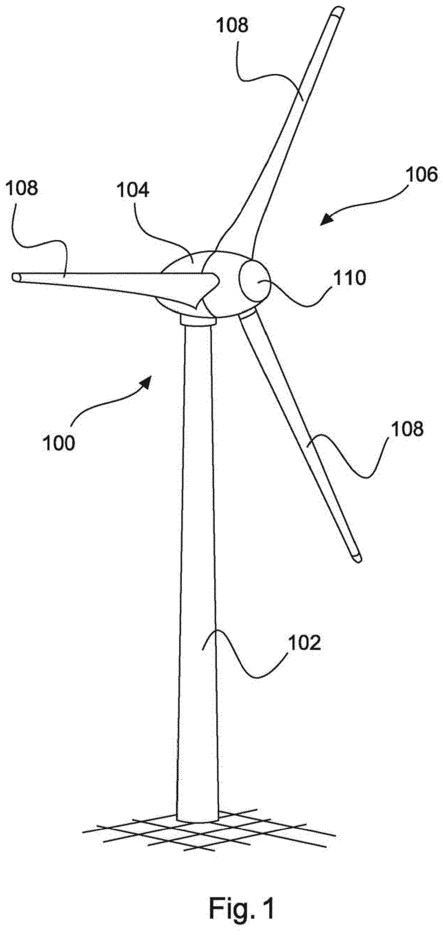

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

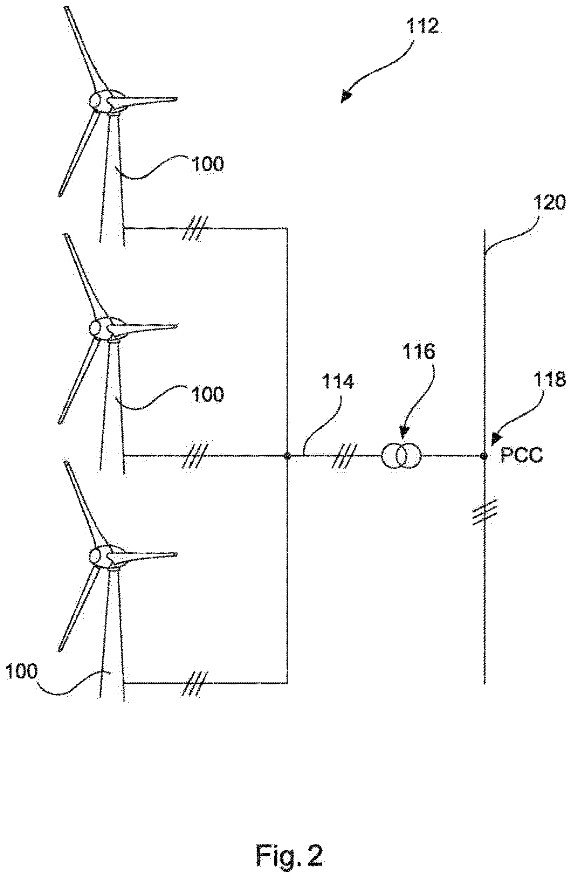

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

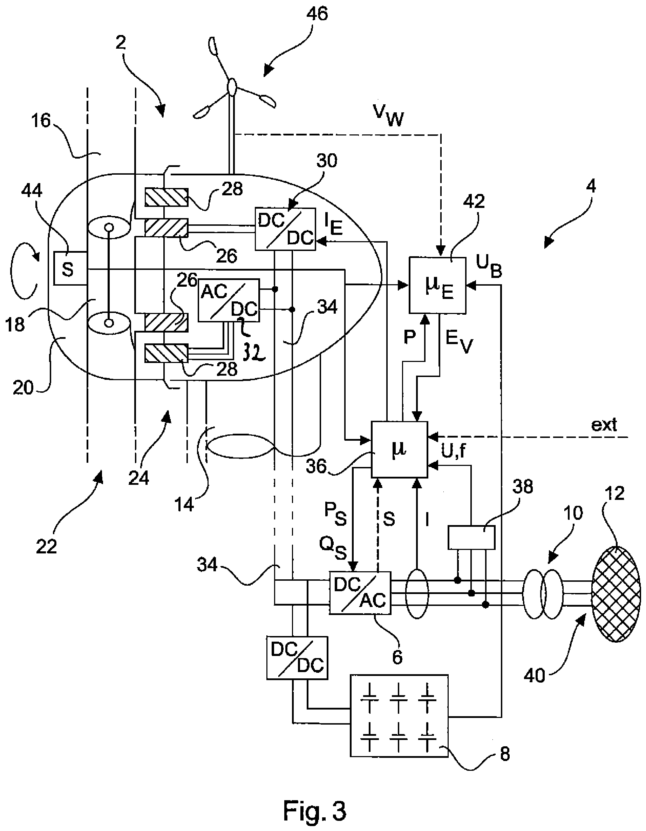

Figur 3 zeigt in einer schematischen und veranschaulichenden Struktur eine Windenergieanlagengondel 2 mit einer Steuerungsstruktur 4 einschließlich eines Wechselrichters 6 der eine Einspeisevorrichtung bildet. Außerdem ist ein Batteriespeicher 8 als weitere Energiequelle vorhanden. Mit der Einspeisevorrichtung 6, nämlich dem Wechselrichter, wird über einen Transformator 10 in ein schematisch angedeutetes elektrisches Netzwerk 12 eingespeist. In dieses elektrische Netzwerk 12 speisen auch weitere Energieerzeuger ein und es sind elektrische Verbraucher daran angeschlossen, wobei beides hier nicht dargestellt ist.

Die Funktionsweise der Windenergieanlage, von der die Gondel 2 und ein Turmansatz 14 angedeutet sind, wird nachfolgend zunächst allgemein beschrieben. An der Gondel 2 sind ebenfalls schematisch dargestellte Rotorblätter 16 angeordnet, nämlich im Bereich einer Nabe 18 eines Spinners 20. Diese Rotorblätter 16, von denen vorzugsweise drei vorhanden sind, in der Figur 3 aber nur zwei dargestellt sind, werden durch den Wind angetrieben und versetzen den Rotor 22, der im Wesentlichen aus den Rotorblättern 16, der Nabe 18 und dem Spinner 20 besteht, in eine Drehbewegung. Daraus wird mithilfe des Generators 24 elektrische Leistung erzeugt, nämlich eine Generatorleistung. Der Generator 24 weist dazu einen Läufer 26 und einen Stator 28 auf. Der Begriff Läufer wird hier unabhängig vom Typ des Generators 24 verwendet, um eine Verwechslung mit dem aerodynamischen Rotor 22 zu vermeiden. Der Läufer 26 ist dabei mit der Nabe 18 und damit mit dem Rotor 22 fest verbunden. Grundsätzlich kann aber auch ein Getriebe zwischengeschaltet sein.

Der bevorzugte Generator 24 ist ein Synchrongenerator. Insbesondere wird ein fremderregter Synchrongenerator vorgeschlagen. Für das Bereitstellen einer Erregerleistung für den fremderregten Synchrongenerator ist der Stromsteller 30 vorgesehen, der einen Erregerstrom dem Läufer 26 zuführt. Ein dafür zu verwendender Schleifring ist hier nicht dargestellt.

Die von dem Generator 24 erzeugte Generatorleistung wird von dem Stator 28 an den Gleichrichter 32 gegeben, der ihn gleichrichtet und einen entsprechend gleichgerichteten Gleichstrom mit einer entsprechenden Gleichspannung an einer Sammelschiene 34 bereitstellt. Im laufenden Betrieb kann der Stromsteller 30 seine Energie auch von der Sammelschiene 34 beziehen. Für die nachfolgenden Betrachtungen der Einspeisung und Netzstützung wird der Leistungsanteil, den der Stromsteller 30 benötigt, vernachlässigt.

Die Sammelschiene 34, die nicht unbedingt als Schiene ausgeführt sein muss, sondern auch durch Leitungen oder Leitungsbündel realisiert sein kann, ist mit einem Eingang des Wechselrichters 6 gekoppelt.

Der Wechselrichter 6 wandelt somit den Gleichstrom bzw. die Gleichspannung der Sammelschiene 34 in einen Wechselstrom bzw. eine Wechselspannung um, die über den Transformator 10 transformiert und in das elektrische Netzwerk 12 eingespeist wird.

Kommt es nun zu einem mehr oder weniger plötzlichen Leistungsbedarf, weil bspw. die Leistungsbilanz im elektrischen Versorgungsnetz 12 negativ geworden ist, so kann vorgesehen sein, durch den Wechselrichter 6 zusätzliche Stützleistung einzuspeisen. In der in Figur 3 gezeigten Ausführungsform kommt dazu besonders in Betracht, Leistung aus dem Batteriespeicher 8 oder aus der Rotationsenergie des Rotors 22 zu verwenden. Dazu kann die Steuereinheit 36 dem Wechselrichter 6 eine entsprechende Sollleistung Ps vorgeben. Im Übrigen ist angedeutet, dass die Steuereinheit 36 dem Wechselrichter 6 auch eine Blindleistung Qs vorgeben kann. Außerdem kann der Wechselrichter 6 die Scheinleistung S als Information an die Steuereinheit 36 geben.

Diese einzuspeisende Leistung Pₛ, die insoweit eine Sollleistung darstellt, setzt sich zusammen aus einer elektrischen Grundleistung und der einzuspeisenden Stützleistung. Im Normalfall, wenn kein Bedarf einer Stützleistung besteht, entspricht die Sollleistung Ps im Wesentlichen der Grundleistung. Über sie wird somit auch im Normalbetrieb die Leistungsabgabe der Windenergieanlage gesteuert. Wenn dann zusätzlich eine Stützleistung eingespeist werden soll, weil sich der Wert dieser Sollleistung Ps also zusätzlich erhöhen soll, muss die Steuereinheit 36 dafür zunächst einen Anlass haben. Häufig wird sich der Anlass aus der Erfassung der Netzfrequenz f ergeben. Besonders wenn die Netzfrequenz f abfällt, kann ein solcher Bedarf entstehen, zusätzliche Leistung zur Netzstützung einzuspeisen. Dafür ist die Spannungsmessvorrichtung 38 vorgesehen, die neben der Ausgangsspannung U des Wechselrichters 6 auch die Netzfrequenz f erfasst und der Steuereinheit 36 zuführt. Alternativ kann die Messung der Spannung und der Frequenz auch an einer anderen Stelle vorgenommen werden, wie bspw. zwischen dem Transformator 10 und dem elektrischen Versorgungsnetz 12, also dort an dem Netzanschlusspunkt 40.

Außerdem oder alternativ kann auch über ein externes Signal, das in Figur 3 als "ext" angedeutet ist, ein Bedarf einer Netzstützung erkannt oder ausgelöst werden. Das Signal "ext" kann von einem Netzbetreiber bereitgestellt werden.

Somit kann die Steuereinheit 36 anhand wenigstens einer dieser genannten Größen den Bedarf zum Einspeisen zusätzlicher Stützleistung zur Netzstützung erkennen.

Es wird nun vorgeschlagen, dass zusätzlich zur Berechnung einer einzuspeisenden Stützleistung abhängig von diesen Größen, die einen solchen Bedarf anzeigen, zunächst eine insgesamt vorhandene Stützenergiemenge erfasst und dann berücksichtigt wird.

Zur Bestimmung der verfügbaren Stützenergie Ev ist die Berechnungseinheit 42 vorgesehen. Die Berechnungseinheit 42, die auch mit der Steuereinheit 36 in einem Gerät oder in einer Prozesssteuerung vereint werden könnte, berücksichtigt in der Ausführungsform der Figur 3 sowohl verfügbare Energie aus Rotationsenergie des Rotors 22 als auch aus Speicherenergie des Batteriespeichers 8. Die dadurch insgesamt ermittelte verfügbare Stützenergiemenge Ev wird dann zum Vorgeben der Stützleistung berücksichtigt und dafür gemäß der Struktur der Figur 3 an die Steuereinheit 36 übertragen.

Die verfügbare Stützenergiemenge Ev setzt sich dabei additiv zusammen aus den einzelnen verfügbaren Stützenergieteilmengen des Rotors 22 und des Batteriespeichers 8. Sie setzt sich also zusammen aus der verfügbaren Rotationsenergie des Rotors 22 und der verfügbaren Speicherenergie des Batteriespeichers 8.

Die verfügbare Speicherenergie des Batteriespeichers 8 kann bspw. abhängig der Batteriespannung U_{B} ermittelt werden. Der Batteriespeicher kann dafür diesen Wert der Batteriespannung U_{B} an die Berechnungseinheit 42 übertragen. Alternativ könnte auch der Batteriespeicher 8, besonders dann, wenn er eine komplexe Speicherbank mit vielen Einheiten ist, selbst die verfügbare Speicherenergie bestimmen und an die Berechnungseinheit 42 übertragen oder bspw. einen Ladezustand an die Berechnungseinheit 42 übertragen, aus dem die Berechnungseinheit 42 dann die verfügbare Speicherenergiemenge bestimmt.

Zur Bestimmung bzw. Berechnung der verfügbaren Rotationsenergie des Rotors 22 erhält die Berechnungseinheit 42 u.a. die Drehzahl n, die mit dem Drehzahlsensor 44 erfasst werden kann. Das Massenträgheitsmoment des Rotors 22 liegt der Berechnungseinheit 42 vor und somit kann die Rotationsenergie in Abhängigkeit der Drehzahl n berechnet werden.

Die dem Rotor 22 aufgrund seiner aktuellen Drehzahl n gespeicherte Rotationsenergie ist aber faktisch nicht vollständig verfügbar, weil der Rotor, besonders in einem Moment, in dem das Netz gestützt werden soll, nicht auf 0 oder eine andere zu niedrige Drehzahl reduziert werden sollte oder nicht reduziert werden darf.

Entsprechend berücksichtigt die Berechnungseinheit 42 auch insgesamt den Betriebspunkt der Windenergieanlage, der auch als Arbeitspunkt bezeichnet werden kann. Hierzu kommt besonders in Betracht, auch die aktuelle Leistung P, nämlich die aktuelle Anlagenleistung, also die Leistung, die die Windenergieanlage derzeit abgibt, zu berücksichtigen. Diese aktuelle Leistung P erhält die Berechnungseinheit 42 von der Steuereinheit 36. Die Steuereinheit 36 kennt diese aktuelle Leistung P üblicherweise, weil sie diese Leistung P zur Steuerung der Windenergieanlage selbst verwendet. Insbesondere stellt die Steuereinheit 36 den Arbeitspunkt der Windenergieanlage ein.

Vorsorglich wird darauf hingewiesen, dass eine solche Steuerung der Windenergieanlage auch in einer weiteren Steuereinheit durchgeführt werden kann oder dass auch eine gemeinsame zentrale Steuereinheit vorgesehen sein kann, die die Aufgaben der Steuereinheit 36 und der Berechnungseinheit 42 zusammen löst.

Aufgrund dieses Betriebspunktes, der somit der Berechnungseinheit 42 zumindest hinsichtlich Drehzahl n und Leistung P bekannt ist, kann nun abgeschätzt werden, bis zu welcher Drehzahl der Rotor 22 abgebremst werden könnte. Daraus ist dann nicht nur die vorhandene Rotationsenergie bestimmbar, sondern auch die verfügbare Rotationsenergie, die ein Teil der insgesamt vorhandenen Rotationsenergie ist.

Im Übrigen kann die Berechnungseinheit 42 einen Vorschlag oder Sollwert für eine Drehzahlerhöhung an die Steuereinheit 36 geben, auf die die Drehzahl erhöht werden kann, um dadurch eine höhere Rotationsenergie zu schaffen um dann doch eine höhere verfügbare Rotationsenergie zu erreichen. Dies ist in Figur 3 allerdings nicht weiter dargestellt.

Zusätzlich kann für die Auswertung des Betriebspunktes auch der Blattwinkel der Rotorblätter berücksichtigt werden. Dieser Blattwinkel α kann bspw. an den Rotorblättern 16 gemessen werden, was in der Figur 3 angedeutet ist. Alternativ kann auch die Steuereinheit 36 einen solchen Blattwinkel vorgeben und diesen gleichzeitig der Berechnungseinheit 42 übermitteln. Ist bspw. der Blattwinkel im Teillastbetrieb, wenn die Anlage also nicht mit Nennleistung läuft, größer als ein für diesen Betrieb typischer Teillastwinkel, deutet das daraufhin, dass ein stärkerer Wind weht, als nur aufgrund der Drehzahl und der Leistung anzunehmen wäre. Das kann bspw. bedeuten, dass sich der aktuelle Betriebspunkt an einer Flanke einer Drehzahl-/Leistungskennlinie befindet und daher die Drehzahl nicht stark verringert werden kann, da das zu einer starken Leistungseinbuße führen könnte. Das wird bei der Bestimmung der vorhandenen Stützenergie berücksichtigt werden. Ist nun diese verfügbare Stützenergiemenge Ev bestimmt worden, kann die Steuereinheit 36 damit die zusätzlich einzuspeisende Stützleistung bestimmen und die Sollleistung Ps entsprechend erhöhen und einen entsprechenden Sollwert an den Wechselrichter 6 geben.

Zusätzlich kann die Steuereinheit 36 dazu den Erregerstrom I_{E} erhöhen und dazu ein entsprechendes Signal an den Stromsteller 30 geben.

Grundsätzlich kommt auch in Betracht, statt eines passiven Gleichrichters 32 einen gesteuerten Gleichrichter zu verwenden und darüber die Statorströme zu verändern und dadurch die Generatorleistung zu verändern. Durch die Veränderung der Generatorleistung, besonders durch Erhöhung des Erregerstroms I_{E} wird der Rotor 22 abgebremst und dadurch die Rotationsenergie entnommen.

Es ist nun möglich, bereits die zur Netzstützung einspeisende Stützleistung im Lichte der verfügbaren Stützenergiemenge vorzuplanen und dadurch eine Stützung des elektrischen Versorgungsnetzes zu erreichen und gleichzeitig zu gewährleisten, dass die Windenergieanlage zu jedem Zeitpunkt einen stabilen Betriebspunkt aufweist. Besonders wird dadurch verhindert, dass die Windenergieanlage während sie zusätzliche Stützleistung in das elektrische Versorgungsnetz einspeist plötzlich in ihrer Leistungsabgabe zusammenbricht.

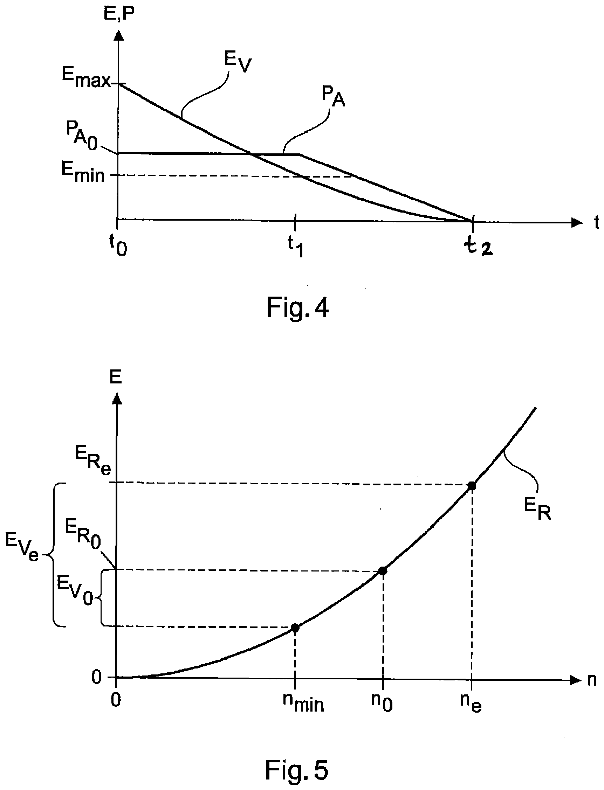

Eine Möglichkeit, in Abhängigkeit der verfügbaren Stützenergie Ev eine Stützleistung P_{A} zu planen, ist in Figur 4 veranschaulicht. Dort ist die verfügbare Stützenergiemenge bzw. die verfügbare Stützenergie Ev in Abhängigkeit der Zeit t aufgetragen und in demselben Diagramm ist die Stützleistung P_{A} ebenfalls aufgetragen. Die dort veranschaulichte Ausführungsform sieht vor, dass die Stützleistung P_{A} zunächst in Abhängigkeit einer erfassten Unterfrequenz im elektrischen Versorgungsnetz vorgegeben wird und für die Stützenergiemenge Ev geprüft wird, ob diese oberhalb oder unterhalb eines vorgegebenen Grenzwertes liegt, nämlich ob sie unterhalb der Mindeststützenergiemenge Eₘᵢₙ liegt. Hierfür wird vereinfachend angenommen, dass das Kriterium, das die Stützleistung P_{A} auslöst, grundsätzlich, bspw. eine zu niedrige Frequenz, zu einer konstanten Stützleistung P_{A} führen würde. Entsprechend ist für die einzuspeisende Stützleistung P_{A} zunächst ein konstanter Wert angenommen. Der könnte aber auch bspw. abhängig der Abweichung der Netzfrequenz von einem Netzfrequenzsollwert variieren, oder in Abhängigkeit eines Frequenzgradienten der Netzfrequenz ermittelt werden.

Somit weist diese Stützleistung P_{A} zunächst den Wert P_{A0} auf und behält diesen von dem Zeitpunkt to bis zum Zeitpunkt t₁ bei. Die verfügbare Stützenergiemenge Ev beginnt zum Zeitpunkt to mit dem maximalen Stützenergiemengenwert Eₘₐₓ und fällt aufgrund der konstant eingespeisten Stützleistung P_{A} bis zum Zeitpunkt t₁ linear ab.

Beim Zeitpunkt t₁ erreicht sie und unterschreitet den Wert der Mindeststützenergiemenge Eₘᵢₙ und das führt dazu, dass die Stützleistung P_{A} reduziert wird.

Die dort gezeigte Ausführungsform schlägt dabei vor, dass die Stützleistung P_{A} von dem Zeitpunkt t₁ aus linear auf 0 reduziert wird und zwar so, dass dabei genau die zum Zeitpunkt t₁ noch verfügbare Stützenergiemenge aufgebraucht wird. Für den Sonderfall, dass eine Leistung linear von einem Anfangswert, hier nämlich dem konstanten Stützleistungswert P_{A0} auf 0 reduziert wird, lässt sich die dabei benötigte Energie E mit der Formel E=1/2P_{*}t berechnen. Da hier die zu verbrauchende Energie der zum Zeitpunkt t₁ noch vorhandenen Energie entspricht, nämlich der Mindeststützenergiemenge Eₘᵢₙ und die Anfangsleistung der Leistung P_{A0} entspricht, berechnet sich die Zeit, in der die Leistung linear auf 0 reduziert wird mit der Formel t=2_{*}Eₘᵢₙ/P_{A0}. Die so berechnete Zeit ist die Zeitdauer gemäß dem Diagramm der Figur 4 von dem Zeitpunkt t₁ bis zum Zeitpunkt t₂. Dieser Verlauf ist in der Figur 4 veranschaulicht und mit dieser Variante lässt sich zunächst eine große Stützleistung P_{A} einspeisen, die erst spät reduziert wird und auch mit den reduzierten Werten anfangs noch einen Stützbeitrag leisten kann. Gleichzeitig wird die verfügbare Stützenergiemenge Ev optimal ausgenutzt.

Figur 5 veranschaulicht Zusammenhänge zwischen der Drehzahl n und verfügbarer Rotationsenergie. Das Diagramm zeigt auf der Abszisse die Drehzahl n vom Wert 0 bis über eine erweiterte Drehzahl nₑ hinaus. Dazu ist die Rotationsenergie E_{R} in Abhängigkeit der Drehzahl n aufgetragen. Es ist zu erkennen, dass die Rotationsenergie E_{R} bei der Drehzahl mit dem Wert 0 ebenfalls 0 ist und von dort quadratisch mit der Drehzahl n ansteigt.

Bei dem Diagramm der Figur 5 wird angenommen, dass die Windenergieanlage mit der Drehzahl no betrieben wird. Das stellt dort die normale Drehzahl dar, die insbesondere bei der dabei vorherrschenden Windgeschwindigkeit üblicherweise verwendet werden würde. Diese Drehzahl no ist somit eine Rotationsenergie E_{R0} zugeordnet. Diese Rotationsenergie E_{R0} ist allerdings nicht die verfügbare Rotationsenergiemenge, weil die Drehzahl nur bis zur minimalen Drehzahl nₘᵢₙ reduziert werden darf. Entsprechend ist hier die verfügbare Rotationsenergiemenge nur die als Evo gekennzeichnete normale verfügbare Rotationsenergiemenge. Genau diese normale verfügbare Rotationsenergiemenge Evo wird hier als verfügbare Stützenergiemenge berechnet, unterstellt dass keine weiteren Energiequellen vorhanden sind.

Figur 5 veranschaulicht auch, dass eine Erhöhung der verfügbaren Rotationsenergiemenge möglich ist, wenn die Windenergieanlage mit einer höheren Drehzahl betrieben wird. Dazu wird veranschaulichend die erhöhte oder erweiterte Drehzahl nₑ vorgeschlagen. Die führt zu einem Energiewert E_{Re} als erweiterte Rotationsenergie des Rotors. Durch diese Erhöhung der Drehzahl auf diese erweiterte Drehzahl nₑ lässt sich somit die verfügbare Rotationsenergiemenge auf den Wert der erweiterten verfügbaren Rotationsenergiemenge E_{Ve} erhöhen. Aufgrund des quadratischen Zusammenhangs zwischen der Rotationsenergie E_{R} und der Drehzahl n hat diese vorgeschlagene Drehzahlerhöhung einen sehr großen Effekt. Vorsorglich wird darauf hingewiesen, dass die Figur 5 veranschaulichend ist und je nach Betriebspunkt auch kleinere Drehzahlerhöhungen in Betracht kommen und insoweit Figur 5 nur veranschaulichend ist.

## Patentansprüche

1. Verfahren zum Einspeisen elektrischer Leistung in ein elektrisches Versorgungsnetz (12) mittels wenigstens einer Windenergieanlage an einem Netzanschlusspunkt (40), wobei
- die wenigstens eine Windenergieanlage einen aerodynamischen Rotor (22) mit Rotorblättern aufweist und der Rotor ein Trägheitsmoment aufweist und mit variabler Rotordrehzahl betrieben werden kann,
- die wenigstens eine Windenergieanlage einen Generator (24) aufweist zum Erzeugen einer Generatorleistung,
- mehrere Energieerzeuger Leistung in das elektrische Versorgungsnetz einspeisen und
- mehrere Verbraucher Leistung aus dem elektrischen Versorgungsnetz entnehmen,
sodass sich im elektrischen Versorgungsnetz eine Leistungsbilanz zwischen der eingespeisten und der entnommenen Leistung ergibt, die positiv ist, wenn mehr Leistung eingespeist als entnommen wird, und das Verfahren umfasst die Schritte:
- Einspeisen einer elektrischen Grundleistung in Abhängigkeit verfügbarer Windleistung,
- Vorgeben einer zusätzlich einzuspeisenden Stützleistung (P_{A}) und
- zusätzliches Einspeisen der vorgegebenen zusätzlich einzuspeisenden Stützleistung (P_{A}) zur Stützung des elektrischen Versorgungsnetzes, wobei
- eine zur einzuspeisenden Stützleistung verfügbare Stützenergiemenge (Ev) bestimmt wird und
- das Vorgeben der zusätzlich einzuspeisenden Stützleistung (P_{A}) in Abhängigkeit der bestimmten verfügbaren Stützenergiemenge (Ev) erfolgt, wobei
- die Stützleistung in Abhängigkeit eines Netzzustandes (U, f, ext) des elektrischen Versorgungsnetzes, insbesondere der Netzfrequenz, vorgegeben wird, wobei
- zusätzlich eine Leistungsobergrenze (P_{A0}) in Abhängigkeit der verfügbaren Stützenergiemenge (Ev) bestimmt und eingehalten wird, **dadurch gekennzeichnet, dass**
- die vorgegebene Stützleistung (P_{A}) mit einem vorgegebenen, zeitlich abfallenden Verlauf reduziert wird, sobald die verfügbare Stützenergiemenge (Ev) einen vorgegebenen Grenzwert (Eₘᵢₙ) erreicht hat.

2. Verfahren nach Anspruch 1,
**dadurch gekennzeichnet, dass**
die verfügbare Stützenergiemenge (Ev) wenigstens ermittelt wird aus
- dem Trägheitsmoment des Rotors,
- wenigstens einer Betriebskenngröße des aktuellen Betriebspunktes der Windenergieanlage, und
- einer zulässigen unteren Rotordrehzahl.

3. Verfahren nach Anspruch 2,
**dadurch gekennzeichnet, dass**
- die wenigstens eine Betriebsgröße des aktuellen Betriebspunktes wenigstens eine Größe umfasst, ausgewählt aus der Liste bestehend aus
- der aktuellen Rotordrehzahl,
- der aktuellen Generatorleistung und
- der vorherrschenden Windgeschwindigkeit,
und dass außerdem oder alternativ
- die zulässige untere Rotordrehzahl abhängig des aktuellen Betriebspunktes bestimmt wird, insbesondere abhängig der aktuellen Drehzahl.

4. Verfahren nach einem der vorstehenden Ansprüche,
**dadurch gekennzeichnet, dass**
zum Einspeisen der elektrischen Leistung wenigstens ein Wechselrichter (6) verwendet wird und die zusätzlich einzuspeisende Stützleistung (P_{A}) abhängig einer Auslastung des wenigstens einen Wechselrichters und außerdem oder alternativ abhängig einer eingespeisten Blindleistung bestimmt wird.

5. Verfahren nach einem der vorstehenden Ansprüche,
**dadurch gekennzeichnet, dass**
zur Ermittlung der verfügbaren Stützenergiemenge (Ev) eine Leistungseinbuße durch eine Reduzierung der Rotordrehzahl berücksichtigt wird.

6. Verfahren nach einem der vorstehenden Ansprüche,
**dadurch gekennzeichnet, dass**
die wenigstens eine Windenergieanlage (100) zur Bereitstellung der Stützleistung mit wenigstens einem elektrischen Speicher (8) gekoppelt ist und zur Ermittlung der verfügbaren Stützenergiemenge eine Rotationsenergie des Rotors (22) und jeweils ein Speicherinhalt des wenigstens einen elektrischen Speichers berücksichtigt wird, wobei der wenigstens eine elektrische Speicher eine Batterie und/oder einen Hochleistungskondensator umfasst.

7. Verfahren nach einem der vorstehenden Ansprüche,
**dadurch gekennzeichnet, dass**
beim Einspeisen einer Stützleistung die verfügbare Stützenergiemenge (Ev)
- in Abhängigkeit der eingespeisten Stützleistung (P_{A}) und außerdem oder alternativ
- unter Berücksichtigung eines Änderungsverhaltens der Windenergieanlage als Reaktion auf die Einspeisung der Stützleistung, besonders unter Berücksichtigung einer Abnahme der Rotordrehzahl als Reaktion auf eine Abgabe von Rotationsenergie des Rotors aktualisiert wird.

8. Verfahren nach einem der vorstehenden Ansprüche,
**dadurch gekennzeichnet, dass**
die wenigstens eine Windenergieanlage (100) mit wenigstens einem in seinem Verbrauch steuerbar reduzierbaren Verbraucher gekoppelt ist und die Bestimmung der verfügbaren Stützenergiemenge (Ev) eine durch eine Reduzierung des wenigstens einen steuerbar reduzierbaren Verbrauchers verfügbare Energiemenge berücksichtigt.

9. Verfahren nach einem der vorstehenden Ansprüche,
**dadurch gekennzeichnet, dass**
zum Vorgeben der Stützleistung ein Verlauf der Stützleistung in Abhängigkeit der verfügbare Stützenergiemenge (Ev) vorgegeben wird, insbesondere dass das Vorgeben der Stützleistung abhängig der Stützenergiemenge über einen zeitabhängigen Verlauf erfolgt.

10. Verfahren nach einem der vorstehenden Ansprüche,
**dadurch gekennzeichnet, dass**
die wenigstens eine Windenergieanlage (100) in einem Betriebspunkt betrieben wird, der sich bei Abgabe von Rotationsenergie zunächst verbessert, insbesondere dass sie mit einer so hohen Rotordrehzahl betrieben wird, dass sich die Rotordrehzahl durch Abgabe von Schwungenergie temporär auf eine leistungsoptimale Rotordrehzahl verringert.

11. Windenergieanlage (100) zum Einspeisen elektrischer Leistung in ein elektrisches Versorgungsnetz an einem Netzanschlusspunkt (12), umfassend
- einen aerodynamischen Rotor (22) mit Rotorblättern und der Rotor weist ein Trägheitsmoment auf und kann mit variabler Rotordrehzahl betrieben werden,
- einen Generator (24) zum Erzeugen einer Generatorleistung,
- eine Steuereinheit (36) zum Steuern eines Einspeisens einer elektrischen Grundleistung in Abhängigkeit verfügbarer Windleistung,
- ein Vorgabemittel zum Vorgeben einer zusätzlich einzuspeisenden Stützleistung (PA),
- eine Einspeisevorrichtung (6), zum Einspeisen der vorgegebenen Stützleistung (P_{A}) zur Stützung des elektrischen Versorgungsnetzes,
- eine Berechnungseinheit (42) zum Bestimmen einer zur einzuspeisenden Stützleistung verfügbaren Stützenergiemenge (Ev) und wobei
- die Stützleistung (P_{A}) in Abhängigkeit der bestimmten verfügbaren Stützenergiemenge (Ev) vorgegeben wird, wobei
- die Stützleistung (P_{A}) in Abhängigkeit eines Netzzustandes (U, f, ext) des elektrischen Versorgungsnetzes, insbesondere der Netzfrequenz, vorgegeben wird, wobei
- zusätzlich eine Leistungsobergrenze (P_{A0}) in Abhängigkeit der verfügbaren Stützenergiemenge (Ev) bestimmt und eingehalten wird,
**dadurch gekennzeichnet, dass**
- die vorgegebene Stützleistung (P_{A}) mit einem vorgegebenen, zeitlich abfallenden Verlauf reduziert wird, sobald die verfügbare Stützenergiemenge (Ev) einen vorgegebenen Grenzwert (Eₘᵢₙ) erreicht hat.

12. Windenergieanlage (100) nach Anspruch 11, dazu vorbereitet, ein Verfahren nach einem der Ansprüche 1 bis 10 auszuführen.

13. Windpark (112) mit mehreren Windenergieanlagen (100), wobei
- Windenergieanlagen nach Anspruch 11 oder 12 verwendet werden und/oder
- ein Verfahren nach einem der Ansprüche 1 bis 10 verwendet wird.

## Claims

1. A method for feeding electrical power into an electrical supply grid (12)
by means of at least one wind power installation at a grid connection point (40), wherein
- the at least one wind power installation has an aerodynamic rotor (22) with rotor blades and the rotor has a moment of inertia and can be operated with variable rotor speed,
- the at least one wind power installation has a generator (24) for generating a generator power,
- multiple energy generators feed power into the electrical supply grid
and
- multiple consumers take power from the electrical supply grid,
so that a power balance in the electrical supply grid between the power fed in and the power taken is produced and is positive if more power is fed in than is taken, and the method comprises the steps of:
- feeding in a basic electrical power in dependence on available wind power,
- specifying a supporting power (P_{A}) to be additionally fed in
and
- additionally feeding in the specified supporting power (P_{A}) to be additionally fed in for supporting the electrical supply grid, wherein
- an amount of supporting energy (Ev) available for the supporting power to be fed in being determined and
- the specifying of the supporting power (P_{A}) to be additionally fed in taking place in dependence on the available amount of supporting energy (Ev) determined, wherein
- the supporting power is specified in dependence on a grid state (U, f, ext) of the electrical supply grid, in particular of the grid frequency, wherein
- an upper power limit (P_{A0}) being additionally determined in dependence on the available amount of supporting energy (Ev) and maintained, **characterized in that**
- the specified supporting power (P_{A}) being reduced with a specified progression falling overtime, as soon as the available amount of supporting energy (Ev) has reached a specified limit value (Eₘᵢₙ).

2. The method as claimed in claim 1,
**characterized in that**
the available amount of supporting energy (Ev) is at least determined from
- the moment of inertia of the rotor,
- at least one operating parameter of the operating point at the time of the wind power installation, and
- an admissible lower rotor speed.

3. The method as claimed in claim 2,
**characterized in that**
- the at least one operating variable of the operating point at the time comprises at least one variable selected from the list consisting of
- the rotor speed at the time,
- the generator power at the time and
- the prevailing wind speed,
and **in that** also or alternatively
- the admissible lower rotor speed is determined depending on the operating point at the time, in particular depending on the rotational speed at the time.

4. The method as claimed in one of the preceding claims,
**characterized in that**
at least one inverter (6) is used for feeding in the electrical power and the supporting power (P_{A}) to be additionally fed in is determined depending on the capacity utilization of the at least one inverter and also or alternatively depending on a reactive power fed in.

5. The method as claimed in one of the preceding claims,
**characterized in that**
for determining the available amount of supporting energy (Ev), a power loss due to a reduction of the rotor speed is taken into consideration.

6. The method as claimed in one of the preceding claims,
**characterized in that**
the at least one wind power installation (100) for providing the supporting power is coupled to at least one electrical store (8) and, for determining the available amount of supporting energy, a rotational energy of the rotor (22) and in each case a storage content of the at least one electrical store are taken into consideration, the at least one electrical store comprising a battery and/or a high-capacity capacitor.

7. The method as claimed in one of the preceding claims,
**characterized in that**
when feeding in a supporting power, the available amount of supporting energy (Ev) is updated
- in dependence on the supporting power (P_{A}) fed in and also or alternatively
- while taking into consideration a behavior of change of the wind power installation as a reaction to the feeding in of the supporting power, particularly while taking into consideration a decrease in the rotor speed as a reaction to delivering rotational energy of the rotor.

8. The method as claimed in one of the preceding claims,
**characterized in that**
the at least one wind power installation (100) is coupled to at least one consumer that can be controllably reduced in its consumption and the determination of the available amount of supporting energy (Ev) takes into consideration an amount of energy that is available due to a reduction of the at least one controllably reducible consumer.

9. The method as claimed in one of the preceding claims,
**characterized in that**
for specifying the supporting power, a progression of the supporting power in dependence on the available amount of supporting energy (Ev) is specified, in particular in that the specifying of the supporting power depending on the amount of supporting energy takes place by way of a time-dependent progression.

10. The method as claimed in one of the preceding claims,
**characterized in that**
the at least one wind power installation (100) is operated at an operating point that is initially improved when delivering rotational energy, in particular that it is operated at such a high rotor speed that the rotor speed is temporarily reduced to an optimum rotor speed in terms of power by delivering centrifugal energy.

11. A wind power installation (100) for feeding electrical power into an electrical supply grid at a grid connection point (12), comprising
- an aerodynamic rotor (22) with rotor blades and the rotor has a moment of inertia and can be operated with variable rotor speed,
- a generator (24) for generating a generator power,
- a control unit (36) for controlling feeding in of a basic electrical power in dependence on wind power available,
- a specifying means for specifying a supporting power (P_{A}) to be additionally fed in,
- a feeding device (6) for feeding in the specified supporting power (P_{A}) for supporting the electrical supply grid,
- a calculating unit (42) for determining an available amount of supporting energy (Ev) for the supporting power to be fed in and wherein
- the supporting power (P_{A}) being specified in dependence on the amount of supporting energy (Ev) determined, wherein
- the supporting power (P_{A}) is specified in dependence on a grid state (U, f, ext) of the electrical supply grid, in particular of the grid frequency, wherein
- an upper power limit (P_{A0}) being additionally determined in dependence on the available amount of supporting energy (Ev) and maintained,
**characterized in that**
- the specified supporting power (P_{A}) being reduced with a specified progression falling over time, as soon as the available amount of supporting energy (Ev) has reached a specified limit value (Eₘᵢₙ).

12. The wind power installation (100) as claimed in claim 11, prepared for carrying out a method as claimed in one of claims 1 to 10.

13. A wind farm (112) comprising multiple wind power installations (100), wherein
- wind power installations as claimed in claim 11 or 12 being used and/or
- a method as claimed in one of claims 1 to 10 being used.

## Revendications

1. Procédé d'injection de puissance électrique dans un réseau d'alimentation électrique (12) au moyen d'au moins une éolienne sur un point de raccordement au réseau (40), dans lequel
- l'au moins une éolienne présente un rotor (22) aérodynamique avec des pales de rotor et le rotor présente un couple d'inertie et peut fonctionner à une vitesse de rotation de rotor variable,
- l'au moins une éolienne présente un générateur (24) pour produire une puissance de générateur,
- plusieurs générateurs d'énergie injectent de la puissance dans le réseau d'alimentation électrique,
et
- plusieurs consommateurs prélèvent de la puissance du réseau d'alimentation électrique
de sorte qu'il s'établit dans le réseau d'alimentation électrique un bilan de puissance entre la puissance injectée et la puissance prélevée, qui est positif quand la quantité de puissance injectée est plus importante que la quantité de puissance prélevée, et le procédé comprend les étapes :
- d'injection d'une puissance de base électrique en fonction de la puissance éolienne disponible,
- de spécification d'une puissance auxiliaire (P_{A}) à injecter en complément,
et
- d'injection en complément de la puissance auxiliaire (P_{A}) à injecter en complément spécifiée pour soutenir le réseau d'alimentation électrique, dans lequel
- une quantité d'énergie auxiliaire (E_{V}) disponible pour la puissance auxiliaire à injecter est définie et
- la spécification de la puissance auxiliaire (P_{A}) à injecter en complément est effectuée en fonction de la quantité d'énergie auxiliaire (E_{V}) disponible définie, dans lequel
- la puissance auxiliaire est spécifiée en fonction d'un état de réseau (U, f, ext) du réseau d'alimentation électrique, en particulier de la fréquence de réseau, dans lequel
- en complément une limite supérieure de puissance (P_{A0}) est déterminée et respectée en fonction de la quantité d'énergie auxiliaire (E_{V}) disponible, **caractérisé en ce que**
- la puissance auxiliaire (P_{A}) spécifiée est réduite avec une évolution spécifiée baissant dans le temps dès que la quantité d'énergie auxiliaire (E_{V}) disponible a atteint une valeur limite (Eₘᵢₙ) spécifiée.

2. Procédé selon la revendication 1,
**caractérisé en ce que**
la quantité d'énergie auxiliaire (E_{V}) disponible est déterminée au moins à partir
- du couple d'inertie du rotor,
- d'au moins une grandeur caractéristique de fonctionnement du point de fonctionnement instantané de l'éolienne, et
- d'une vitesse de rotation de rotor inférieure autorisée.

3. Procédé selon la revendication 2,
**caractérisé en ce que**
- l'au moins une grandeur de fonctionnement du point de fonctionnement instantané comprend au moins une grandeur choisie parmi la liste constituée de
- la vitesse de rotation de rotor instantanée,
- de la puissance de générateur instantanée et
- de la vitesse du vent prédominante,
et que par ailleurs ou en variante
- la vitesse de rotation de rotor inférieure autorisée est définie en fonction du point de fonctionnement instantané, en particulier en fonction de la vitesse de rotation instantanée.

4. Procédé selon l'une quelconque des revendications précédentes,
**caractérisé en ce que**
au moins un onduleur (6) est utilisé pour injecter la puissance électrique et la puissance auxiliaire (P_{A}) à injecter en complément est définie en fonction d'une charge optimale de l'au moins un onduleur et est définie par ailleurs ou en variante en fonction d'une puissance réactive injectée.

5. Procédé selon l'une quelconque des revendications précédentes,
**caractérisé en ce**
**qu'**une perte de puissance liée à une réduction de la vitesse de rotation de rotor est prise en compte pour déterminer la quantité d'énergie auxiliaire (E_{V}) disponible.

6. Procédé selon l'une quelconque des revendications précédentes,
**caractérisé en ce que**
l'au moins une éolienne (100) est couplée à l'au moins un accumulateur électrique (8) pour fournir la puissance auxiliaire et une énergie de rotation du rotor (22) et respectivement un contenu d'accumulateur de l'au moins un accumulateur électrique sont pris en compte pour déterminer la quantité d'énergie auxiliaire disponible,
dans lequel l'au moins un accumulateur électrique comprend une batterie et/ou un condensateur à puissance élevée.

7. Procédé selon l'une quelconque des revendications précédentes,
**caractérisé en ce que**
lors de l'injection d'une puissance auxiliaire, la quantité d'énergie auxiliaire (E_{V}) disponible est mise à jour
- en fonction de la puissance auxiliaire (P_{A}) injectée et par ailleurs ou en variante
- en prenant en compte un comportement de changement de l'éolienne en réaction à l'injection de la puissance auxiliaire, en particulier en prenant en compte une baisse de la vitesse de rotation de rotor en réaction à une distribution d'énergie de rotation du rotor.

8. Procédé selon l'une quelconque des revendications précédentes,
**caractérisé en ce que**
l'au moins une éolienne (100) est couplée à au moins un consommateur présentant une consommation pouvant être réduite de manière commandée et la définition de la quantité d'énergie auxiliaire (E_{V}) disponible prend en compte une quantité d'énergie disponible par une réduction de l'au moins un consommateur à consommation pouvant être réduite de manière commandée.

9. Procédé selon l'une quelconque des revendications précédentes,
**caractérisé en ce que**
une variation de la puissance auxiliaire est spécifiée en fonction de la quantité d'énergie auxiliaire (E_{V}) disponible pour spécifier la puissance auxiliaire, en particulier que la spécification de la puissance auxiliaire est effectuée en fonction de la quantité d'énergie auxiliaire par l'intermédiaire d'une variation dépendant du temps.

10. Procédé selon l'une quelconque des revendications précédentes,
**caractérisé en ce que**
l'au moins une éolienne (100) fonctionne dans un point de fonctionnement, qui s'améliore en premier lieu lors de la distribution d'énergie de rotation, en particulier qu'elle fonctionne à une vitesse de rotation de rotor si élevée que la vitesse de rotation de rotor se réduit du fait de la distribution d'une énergie cinétique de manière temporaire pour s'établir sur une vitesse de rotation de rotor à puissance optimale.

11. Eolienne (100) destinée à injecter une puissance électrique dans un réseau d'alimentation électrique sur un point de raccordement au réseau (12), comprenant
- un rotor (22) aérodynamique avec des pales de rotor, le rotor présentant un couple d'inertie et pouvant fonctionner à une vitesse de rotation de rotor variable,
- un générateur (24) pour produire une puissance de générateur,
- une unité de commande (36) pour commander une injection d'une puissance de base électrique en fonction de la puissance éolienne disponible,
- un moyen de spécification pour spécifier une puissance auxiliaire (P_{A}) à injecter en complément,
- un dispositif d'injection (6) pour injecter la puissance auxiliaire (P_{A}) spécifiée pour soutenir le réseau d'alimentation électrique,
- une unité de calcul (42) pour définir une quantité d'énergie auxiliaire (E_{V}) disponible pour la puissance auxiliaire à injecter et dans lequel
- la puissance auxiliaire (P_{A}) est spécifiée en fonction de la quantité d'énergie auxiliaire (E_{V}) disponible définie, dans lequel
- la puissance auxiliaire (P_{A}) est spécifiée en fonction d'un état du réseau (U, f, ext) du réseau d'alimentation électrique, en particulier de la fréquence de réseau, dans lequel
- en complément une limite supérieure de puissance (P_{A0}) est définie et respectée en fonction de la quantité d'énergie auxiliaire (E_{V}) disponible,
**caractérisé en ce que**
- la puissance auxiliaire (P_{A}) spécifiée est réduite avec une variation spécifiée baissant dans le temps dès que la quantité d'énergie auxiliaire (E_{V}) disponible a atteint une valeur limite (Eₘᵢₙ) spécifiée.

12. Eolienne (100) selon la revendication 11, préparée pour exécuter un procédé selon l'une quelconque des revendications 1 à 10.

13. Parc éolien (112) avec plusieurs éoliennes (100), dans lequel
- des éoliennes selon la revendication 11 ou 12 sont utilisées et/ou
- un procédé selon l'une quelconque des revendications 1 à 10 est utilisé.
